(19) Europäisches Patentamt
European Patent Office
Office européen des brevets

(11) **EP 3 387 918 A1**

(12) **EUROPÄISCHE PATENTANMELDUNG**

(43) Veröffentlichungstag:
**17.10.2018 Patentblatt 2018/42**

(21) Anmeldenummer: **17166151.5**

(22) Anmeldetag: **12.04.2017**

(51) Int Cl.:
*A23P 10/40* (2016.01)  *A23G 1/00* (2006.01)
*A23G 1/40* (2006.01)  *A23P 10/22* (2016.01)
*A23G 1/04* (2006.01)  *A23L 3/46* (2006.01)
*B01D 1/18* (2006.01)  *B01J 2/16* (2006.01)
*A23G 7/02* (2006.01)  *B01J 2/04* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Bühler AG**
**9240 Uzwil (CH)**

(72) Erfinder:
• **Strähl, Patrick**
**8057 Zürich (CH)**
• **Höhener, Manuel**
**9240 Uzwil (CH)**
• **Paggios, Konstantinos**
**8280 Kreuzlingen (CH)**

(74) Vertreter: **Hepp Wenger Ryffel AG**
**Friedtalweg 5**
**9500 Wil (CH)**

(54) **VORRICHTUNG UND VERFAHREN ZUR HERSTELLUNG SPHÄRISCHER PARTIKEL**

(57) Die Erfindung betrifft eine Vorrichtung und eine Verfahren zur Herstellung sphärischer Partikel. Die Vorrichtung (100) zur Herstellung von Partikeln umfasst einen Kühlbereich (105), in welchem die Partikel auf eine Endtemperatur, insbesondere Raumtemperatur, abkühlbar sind und in welchem die Partikelströmung derart führbar ist, dass im Wesentlichen keine Partikelagglomerate gebildet werden.

Fig. 1

EP 3 387 918 A1

**Beschreibung**

Die Erfindung betrifft eine Vorrichtung und ein Verfahren zur Herstellung von, insbesondere sphärischen, Partikeln.

Zur Herstellung von konventionellen Schokoladenprodukten oder Compound-Massen werden Teilchen, typischerweise bestehend aus kristallinem Zucker, Kakaobestandteilen und/oder Trockenmilchbestandteilen, in flüssiger Fettmasse, insbesondere Kakaobutter, suspendiert.

Bei der Herstellung eines konventionellen Schokoladen- oder Compoundprodukts muss die Schokoladen- oder Compoundmasse zur Erreichung hoher sensorischer Qualität zwischen Walzen zerkleinert und/oder conchiert werden, wobei in Folge der Zerkleinerung kantige Teilchen entstehen. Dabei werden die suspendierten Teilchen desagglomeriert, fein verteilt und hinsichtlich eines Teils ihrer zur Aromabildung beitragenden Inhaltskomponenten auch physikalisch und/oder chemisch verändert. Diese Vorgänge, insbesondere das Conchieren, aber auch das Feinwalzen, sind höchst zeit- und energieaufwändig. Das gilt ebenso, wenn die Bearbeitung in einem Kugelmühlenprozess stattfindet, der alternativ oder zusätzlich zum Einsatz kommen kann.

Anschliessend wird die Masse in einem Temperiervorgang unter Kühlung vorkristallisiert. Die Masse kann dann in Formen gegossen werden und wird schliesslich unter Kühlung endverfestigt, insbesondere kristallisiert die Fettmatrix.

Im Rahmen der vorliegenden Anmeldung werden unter Zuckern süssende Komponenten verstanden, insbesondere Saccharide, also Mono-, Di- und Oligosaccharide, insbesondere mit einem Dextroseäquivalent (DE) von grösser als 20, Zuckeralkohole, Zuckeraustauschstoffe und Süssstoffe, sowie Kombinationen dieser. Das DE wird hierbei gemäss der Lane-Eynon-Methode bestimmt, die beispielsweise in "Zucker und Zuckerwaren" beschrieben ist (siehe Hoffmann/Mauch/Untze, 2. Aufl. 2002, ISBN 3-86022-937-0, S.234-235).

Aus WO2015049292 sind sphärische Partikel zur Herstellung eines Lebensmittelprodukts bekannt, wobei ein solches sphärisches Partikel ein Matrixmaterial aus amorph verfestigtem Biopolymer enthält.

Weiterhin ist es bekannt, derartige Partikel und Agglomerate solcher Partikel in einem Tropfenbildungsprozess, zum Beispiel in einem Sprühprozess mit Ein- oder Mehrstoffdüsen in einem Sprühtrockner herzustellen.

Dabei wird eine feststoffhaltige Flüssigkeit, deren Zusammensetzung an das gewünschte Endprodukt angepasst ist, über ein Düsensystem oder einen Rotationszerstäuber in den Raum eines Trockners versprüht. Im Gegen- oder Gleichstrom zu den entstehenden Tropfen wird heiße Luft geführt. Die Flüssigkeit verdampft und aus jedem Tropfen entsteht ein Pulverpartikel. Die so hergestellten Produkte werden in der Sprühkammer gesammelt oder zum Beispiel über einen Zyklon aus der Trockenluft in einen Sammelbehälter geführt. Die aufeinander fallenden Pulverpartikel agglomerieren in der Regel und bilden ein Granulat.

Dem Sprühtrockner kann ein Wirbelschichtapparat nachgeschaltet sein, wie dies beispielweise in DE 10 2004 024681 beschrieben ist. In dem Wirbelschichtapparat bildet sich eine kreisähnliche Feststoffströmung, in welcher die Einzelpartikel zu gröberen Körnungskollektiven agglomerieren. Aus der WO9838223 ist eine Vorrichtung zum Sprühtrocken von Fructan-Zusammensetzungen geringer Dichte bekannt, der ein statisches und zwei vibrierenden Fliessbetten nachgeschaltet sind. Zu kleine Teilchen werden ausgeblasen.

Aus WO2015049292 ist ebenfalls bekannt, dass für sphärische Partikel, die in einer bevorzugt fettkontinuierlichen Fluidphase dispergiert vorliegen, die rheologischen Eigenschaften, zum Beispiel beschrieben über die Viskositätsfunktion $\eta(\gamma)$ und die Fliessgrenze $\tau_0$, deutlich reduzierte Werte dieser Materialfunktionen aufzeigen gegenüber Suspensionen gleicher Zusammensetzung, in welchen die in den sphärischen Partikeln enthaltenen Komponenten in kantiger, also nicht sphärischer Partikelform, und separat, jedoch mit gleicher oder zumindest vergleichbarer Partikelgrössenverteilung vorliegen.

Niedrige Viskositäten sind bei der Verarbeitung einer Lebensmittelmasse vorteilhaft, da die Masse mit geringerem Energieaufwand durch eine Giessmaschine geführt werden kann und die Komponenten der Maschine leichter zu reinigen sind.

Um diesen Effekt zu erreichen, ist es wünschenswert, bevorzugt sphärische, Einzelpartikel oder Agglomerate mit wenigen Einzelpartikeln zur Verfügung zu stellen.

Auch für konventionell hergestellte Lebensmittelmassen, die zu einer Textur und einem Geschmack des Endprodukts von bekannt guter Qualität führen, ist eine niedrige Viskosität wünschenswert. Dies kann bislang nur unter erheblichem Aufwand erreicht werden.

Aus der EP1031285 ist eine Schokoladenmasse bekannt, die Hydrokolloide enthält. Diese quellen bei einem Kontakt mit Wasser und können zu einer Erhöhung der Viskosität des Produkts während des Verzehrs führen.

Die US2010/0323067 offenbart eine Schokoladenzusammensetzung, welche Süssungsmittel in Form von Nanoteilchen mit einer Grösse zwischen 50 und 1000 nm enthält. Die rheologischen Eigenschaften einer Schokoladenzusammensetzung, die Emulgator enthält, sind abhängig vom Anteil der Nanoteilchen in der Zusammensetzung.

US2006/0121164 zeigt ein Schokoladenprodukt, bei welchem Kakaobestandteile, wie Kakaobutter, in Wasser oder Milch dispergiert sind. Die kakaobasierte Öl-in-Wasser-Suspension bildet ein Gelnetzwerk, dessen rheologische Eigenschaften vom Anteil der Kakaobestandteile abhängen. Auf diese Weise können stabile und kalorienarme Öl-in-Wasser-Suspensionen, zum Beispiel Fruchtpuddings oder Trinkschokoladen gebildet werden.

Es besteht daher die Aufgabe, Vorrichtungen und Verfahren zur zur Verfügung zu stellen, welche die Nachteile des Bekannten überwinden und welche insbesondere einen praktikablen Herstellungsprozess einer Lebensmittelmasse erlauben.

Die der Erfindung zugrunde liegende Aufgabe wird gelöst durch eine Vorrichtung zur Herstellung von, bevorzugt sphärischen, Partikeln mit einem Matrixmaterial aus, insbesondere amorph verfestigtem, Biopolymer, umfassend eine Vorrichtung zur Formgebung und Vereinzelung.

Im Rahmen dieser Erfindung wird unter einer Vorrichtung zur Formgebung und Vereinzelung eine, insbesondere heizbare, Vorrichtung zum Zerstäuben, bzw. Atomisieren, und insbesondere nachfolgendem Trocknen von Flüssigkeiten betrachtet.

Bei der Vorrichtung zur Formgebung und Vereinzelung handelt es sich um eine Vorrichtung zur Sprühtrocknung, in welcher eine wässrige Mischung oder Dispersion mittels mindestens einem Zerstäuber, zum Beispiel einer Sprühdüse, in eine Kammer gesprüht werden. Unter Temperatur- und Druckkontrolle ist im Sprühstrahl die Ausbildung kleiner, bevorzugt runder, Sprühteilchen sowie danach deren Verfestigung durch Trocknung bewirkbar.

Die Vorrichtung besitzt bevorzugt mindestens einen Zerstäuber in Form einer Atomisierungsdüse, zum Beispiel eine Sprühdüse.

Die Vorrichtung umfasst erfindungsgemäss einen Kühlbereich, in welchem die Partikel auf eine Endtemperatur abkühlbar sind und in welchem die Partikelströmung derart führbar ist, dass im Wesentlichen keine, also keine oder wenige oder höchstens kleine Partikelagglomerate, gebildet werden.

Die Endtemperatur ist bevorzugt eine Temperatur unterhalb der Glasumwandlungstemperatur des Matrixmaterials, bevorzugt unterhalb 40°C, beispielsweise Raumtemperatur.

Unter kleinen Agglomeraten werden Agglomerate aus weniger als 50, bevorzugt weniger als 20, Partikeln verstanden.

Unter sphärischen Partikeln werden in der vorliegenden Anmeldung Körper bezeichnet, von denen mehr als 70% der Oberfläche konvex gekrümmt ist, das heisst, weniger als 30% der Oberfläche ist aus ebenen Teilflächen gebildet.

Die sphärischen Partikel haben eine Sphärizität $\Psi$ von grösser als 0.5, bevorzugt grösser als 0.8, weiter bevorzugt grösser als 0.9. Unter Sphärizität $\Psi$ wird das Verhältnis der Oberfläche einer Kugel mit demselben Volumen wie der gegebene Partikel und der Oberfläche des Partikels verstanden:

$$\Psi = \frac{\pi^{\frac{1}{3}}\left(6V_p\right)^{\frac{2}{3}}}{A_p}$$

wobei $V_P$ das Partikelvolumen und $A_P$ die Partikeloberfläche bezeichnen. Hat der Partikel die Form einer Kugel, ergibt sich eine Sphärizität von 1.

Der amorphe Zustand sorgt dafür, dass an der Oberfläche der Partikel keine Kristallflächen mit Kanten vorliegen.

Unter einem Matrixmaterial wird in der vorliegenden Anmeldung eine Grundsubstanz verstanden, in welcher andere Bestandteile, bevorzugt vereinzelt und/oder portioniert und bevorzugt im Wesentlichen gleichmässig verteilt, eingebettet sein können.

Das Matrixmaterial kann einen Wassergehalt aufweisen, der derart gewählt ist, dass insbesondere die Glasumwandlungstemperatur des Matrixmaterials oberhalb der typischen oder beabsichtigten Lager-, Verzehr- und/oder Verarbeitungstemperatur liegt, insbesondere die Glasumwandlungstemperatur grösser gleich 20°C, bevorzugt grösser gleich 25°C, ist, und wobei der Wassergehalt des Matrixmaterials bevorzugt kleiner als 10 Gewichts-% (Gleichgewichtsfeuchte im Matrixmaterial bei 20°C und 1023 hPa) ist.

Mit der Glasumwandlungstemperatur ist die mittels der Dynamischen Differenzkalorimetrie (DSC) bestimmte Glasumwandlungstemperatur gemeint.

Bei dem Biopolymer kann es sich im Rahmen der vorliegenden Anmeldung beispielsweise um eine Stärke, um Proteine, um mikrokristalline Cellulose oder ein Polyglycerinester (PGE) handeln.

Insbesondere handelt es sich bei dem Biopolymer um einen Zucker oder eine Zucker/Polysaccharid-Mischung, z.B. eine Mischung aus Zuckern mit Stärken, gegebenenfalls teilweise abgebauten Stärken, oder das Biopolymer enthält einen Zucker oder eine Zucker/Polysaccharid-Mischung.

Bevorzugt besteht das Biopolymer aus einem Zucker, weiter bevorzugt einem Zucker mit Dextroseäquivalent von grösser als 20, und/oder enthält mindestens einen Zucker aus der folgenden Gruppe: ein Zucker mit Dextroseäquivalent von grösser als 20, Saccharose oder Sucrose, Dextrose, Polydextrose, Maltodextrin, Mannose, Rhamnose, Maltose, Laktose, Fructose, Polyfructose, Lactiolisomalt, Tagatose, Saccharin, Aspartam, Acesulfam, Cyclamat, Neohesperidin, Neotam, Sucralose, Steviosid, Thaumatin oder Zuckeralkohole, wie zum Beispiel Sorbit, Xylit, Mannit, Maltit, Erythrit oder Isomalt, und/oder Kombinationen davon.

In das Matrixmaterial der sphärischen Partikel können Feststoffteilchen und/oder Flüssigkeits- und/oder Gasvolumina eingebettet sein, zum Beispiel Bestandteile von Kakao, Milchbestandteile, Fett, Aromastoffe, eine nutritiv relevante Zusatzkomponente oder eine Kombination davon.

In dem Kühlbereich werden die gesprühten Partikel so geführt, dass sie sich nicht zu nahe kommen, im Wesentlichen nicht gegenseitig berühren und auch nicht auf Vorrichtungsflächen liegen bleiben, bevor sie die Endtemperatur aufweisen. Die Partikel schwimmen, fliegen, schweben oder fallen während des Abkühlens.

Unter der Endtemperatur wird die Temperatur verstanden, auf welche die Temperatur der Partikel nach dem Formgebungs- und Vereinzelungsprozess, zum Beispiel der Sprühtrocknung, asymptotisch zuläuft und/oder welche die Partikel aufweisen, wenn sie für eine Weiterverarbeitung oder Lagerung aus dem Sprühraum oder einem Sammelbehälter entnommen werden. Bevorzugt entspricht die Endtemperatur der Temperatur der Umgebung, also Raumtemperatur, bevorzugt 18°C-25°C, weiter bevorzugt 20°C-25°C.

Die abgekühlten Partikel können auch an einem, bevorzugt temperierbaren, Sieb oder Filter gesammelt werden, von dem sie später mit einem Druckstoss wieder entfernt werden. Kleinstpartikel können so abgetrennt werden.

Bei der Sprühtrocknung wird eine Ausgangsflüssigkeit durch eine oder mehrere Sprühdüsen, insbesondere Druckzerstäuber, pneumatische Zerstäuber oder Rotationszerstäuber, in ein Spray überführt und in einen Sprühraum entlassen.

Die Temperatur der Trocknungsluft beträgt bei Eintritt in den Sprühturm bevorzugt zwischen 100 und 190°C, weiter bevorzugt zwischen 150 und 190°C.

Die versprühten oder anderweitig vereinzelten Partikel können durch einen heissen Gleich- oder Gegenstrom und/oder mittels Mikrowellen aufgeheizt werden, wobei die Flüssigkeit aus den Spraypartikeln entweicht. Die getrockneten Partikel können immer noch eine Temperatur von 50°C - 180°C aufweisen. Es hat sich gezeigt, dass die entfeuchteten Partikel weniger dazu neigen, aneinander haften zu bleiben, wenn sie deutlich abgekühlt sind. Um nicht oder wenig agglomerierte Partikel zu erhalten, werden die Partikel in dem Kühlbereich abgekühlt, bevor sie nennenswert miteinander in Kontakt kommen. Wenn die Lagerbedingungen dann konstant gehalten werden, also die Umgebungsfeuchtigkeit und die Temperatur nicht erhöht werden, so verbleiben die Partikel vereinzelt. Es kann zum Beispiel gelingen, eine Sammlung von sphärischen Einzelpartikeln zu erhalten, die jeweils eine Sphärizität von grösser als 0.5, bevorzugt von grösser als 0.8, aufweisen.

Erfindungsgemäss umfasst der Kühlbereich ein Kühlrohr. Das Kühlrohr kann den Sprühraum in oder entgegen der Sprührichtung verlängern, oder seitlich vom Sprühraum wegführen.

Das Rohr kann als zylindrisches Hohlprofil ausgebildet sein mit kreisrundem, quadratischem, ovalem oder anderem Öffnungsquerschnitt. Das Rohr kann in Durchtrittsrichtung eine sich, bevorzugt konisch, verengende Öffnung und/oder eine sich, bevorzugt konisch, erweiternde Öffnung aufweisen.

Das Rohr kann beispielweise einen grössten Durchmesser von 10-50cm, z.B. 20 cm, und eine Länge von 0.5-3m, z.B. 1.5m, aufweisen.

Die Partikel können aufgrund der Schwerkraft durch das Kühlrohr fallen. Dazu ist das Rohr bevorzugt vertikal angeordnet.

Die Vorrichtung kann eine aktive Führungseinrichtung umfassen, zum Beispiel zur Erzeugung eines gerichteten Fluidstroms. Die Vorrichtung kann beispielweise einen Zyklon umfassen, der für eine gerichtete Luftströmung durch die Rohröffnung sorgt.

Bei einer Vorrichtung mit aktiver Führungseinrichtung kann das Rohr in beliebigen Ausrichtungen angeordnet sein, zum Beispiel horizontal angeordnet sein, und/oder einen beliebigen Verlauf der Rohröffnung aufweisen. Das Rohr kann zum Beispiel gekrümmt sein.

Bevorzugt ist der Kühlbereich so ausgeführt, dass eine kontrollierte Abkühlung der Partikel erfolgt. Dafür weist der Kühlbereich bevorzugt Kontrollmittel auf, also Messvorrichtungen, die einen Rückschluss auf die Temperatur des Kühlbereichs und/oder der Partikel geben. Als Messvorrichtungen können eine Temperatursonde oder ein IR Sensor, insbesondere ein NIR Sensor, vorgesehen sein.

Eine kontrollierte Kühlung kann erfolgen, wenn der Kühlbereich, insbesondere das Kühlrohr, eine Temperiervorrichtung aufweist, also gezielt temperierbar ist, zum Beispiel das Innenvolumen des Kühlrohrs mit einem Temperierfluid, zum Beispiel Temperierluft, beaufschlagbar ist.

Bei Kontakt mit einem Temperierfluid kühlen die Partikel zunächst auf die Temperatur des Temperierfluids ab. Sie können zusammen mit dem Temperierfluid noch weiter abkühlt werden.

Die Temperierluft kann der Partikelströmung im Gegenstrom oder im Gleichstrom zugesetzt werden. Die Temperierluft kann zusammen mit den Partikeln zum Beispiel von einem Zyklon durch den Kühlbereich gezogen werden. Alternativ kann vorgesehen sein, dass die Partikel im Kühlbereich durch eine Temperierluftströmung fallen.

Bevorzugt ist im Kühlbereich eine Zuführung für ein Temperierfluid, zum Beispiel eine Temperierluft, vorgesehen. Dazu kann zum Beispiel in einem Kühlrohr ein Fluideinlass, insbesondere ein Gaseinlass, vorgesehen sein. Die Temperierluft kann mit gegenüber dem Umgebungsdruck erhöhten Druck in den Kühlbereich führbar sein, zum Beispiel mit einer Gasdüse.

Die Temperierluft kann mit den Partikeln zu einem Zeitpunkt erstmals in Kontakt kommen, wenn die Partikel der trocknenden Heissluft und/oder den Mikrowellen nicht mehr ausgesetzt sind und bereits eine erste Abkühlung stattgefunden hat.

Bei der Temperierluft kann es sich um gezielt temperierte Luft handeln, zum Beispiel um Kaltluft, oder durch einen Gaseinlass wird Umgebungsluft bei Raumtemperatur in den Kühlbereich eingezogen.

Der Gaseinlass kann auch so ausgeführt sein, dass Luftmischungen, zum Beispiel eine Mischung aus Umgebungsluft und Kaltluft in den Kühlbereich gelangen. Je nach den Anteilen ist die Temperatur der Temperierluft wählbar. Je nach Menge der Partikel, gewünschter Abkühlrate und/oder Endtemperatur ist die Temperatur der Temperierluft einstellbar.

Als Temperierfluid kann auch eine temperierbare Flüssigkeit vorgesehen sein, in welche die Partikel geführt werden. Die Partikel können für eine spätere Verwendung wieder aus der Flüssigkeit entnommen werden, zum Beispiel indem das Fluid und die Partikel über ein, bevorzugt temperierbares Sieb, geführt werden.

Die Partikel können auch durch Zentrifugieren oder Sedimentation abgetrennt werden.

Als Temperierfluid kommen zum Beispiel Flüssigkeiten in Frage, in welchen die Partikeln nicht auf- oder angelöst werden.

Die Flüssigkeit sollte Inhaltsstoffe aufweisen, die entweder vollständig von den Partikeln entfernbar sind, oder in der Lebensmittelwirtschaft zugelassen sind, zum Beispiel Kakaobutter, Palmfette oder gesättigte Lösungsmittel, wie Ethanol.

Als temperierbare Flüssigkeit kann auch eine Lebensmittelmasse vorgesehen werden, in welcher die Partikel verbleiben. Die Partikel können beispielsweise direkt in eine Fettmasse gelangen, zum Beispiel auf die Oberfläche der Fettmasse versprüht werden. Die Partikel können in der Lebensmittelmasse verrührt werden, so dass es nicht zu einer Agglomeration kommt.

In einer vorteilhaften Ausführung der Erfindung ist mindestens eine Wand des Kühlbereichs, insbesondere des Kühlrohrs, temperierbar.

Die Wand kann elektrisch oder mit einem Temperierfluid temperierbar sein. Insbesondere ist die Wand doppelwandig ausgeführt und/oder für die Durchleitung eines Temperierfluid, einem Temperiergas und/oder einer Temperierflüssigkeit, ausgelegt.

Wird Temperierluft verwendet, so kann dieselbe Luft auch zur Trocknung der Partikel verwendet werden. Während sich die Luft bei der Trocknung abkühlt, erwärmt sie sich beim Kühlen, es kann also Energie gespart werden.

Die Wand lässt sich bevorzugt so temperieren, dass sich im Kühlbereich ein bestimmter Temperaturbereich einstellt, in welchem die Partikel abkühlen.

Die Temperierluft kann so ausgelegt sein, dass sie den Partikelstrom durch den Kühlbereich führt, insbesondere dass ein Kontakt der noch nicht abgekühlten Partikel mit den Wänden des Kühlbereichs verhindert wird. Alternativ oder zusätzlich kann mindestens eine Wand des Kühlbereichs so temperierbar sein, dass die Partikel bei einem Kontakt mit der Wand nicht anhaften.

Dennoch kann es sein, dass sich Anhaftungen von Partikeln an den Wänden des Kühlbereichs nicht ganz verhindern lassen.

Die Wände der Vorrichtung können mit einer Beschichtung oder Textur versehen sein, die einem Anhaften von Partikeln entgegenwirkt, zum Beispiel eine Teflon-Beschichtung aufweisen.

Bevorzugt ist mindestens eine Wand der Vorrichtung, insbesondere des Kühlbereichs, insbesondere eine Wand eines Kühlrohrs, mit einer Vibrationsvorrichtung oder Klopfvorrichtung ausgestattet, mittels welcher Anhaftungen gelöst werden können. Die Vorrichtung, insbesondere der Kühlbereich, kann dann regelmässig gereinigt werden, womit verhindert wird, dass sich zum Beispiel der Kühlbereich verengt, dass ein Wärmeübertrag durch die Wand beschränkt wird und/oder dass Partikelagglomerate von der Wand in den Partikelstrom gelangen.

In einer bevorzugten Ausführung der Vorrichtung verfügt die Vorrichtung über eine Kontroll-und/oder Regeleinheit zur Beeinflussung der Endtemperatur und/oder der Abkühlungsrate der sprühgetrockneten Teilchen.

Je nach gewünschter Eigenschaft der Partikel, also abhängig vom verwendeten Matrixmaterial, von möglichen Einbettungen, von den gewünschten Partikelgrössen und/oder vom Trocknungsgrad, kann es gewünscht oder notwendig sein, eine bestimmte Endtemperatur und/oder eine bestimmte Abkühlgeschwindigkeit vorzugeben. Ausserdem kann die Temperierung der Partikel von der Menge der Partikel und vom Wärmeübertrag abhängen.

Mit der Kontroll-und/oder Regeleinheit kann Einfluss auf die Endtemperatur und/oder die Abkühlungsrate genommen werden. Dazu weist die Vorrichtung bevorzugt einen Sensor auf, mittels dem die Temperatur der Partikel überwacht wird, zum Beispiele eine Temperatursonde oder einen IR Sensor, insbesondere einen NIR Sensor.

Die Kontroll-und/oder Regeleinheit kann beispielsweise so ausgelegt sein, dass die Menge, das Mischungsverhältnis und/oder die Temperatur von Temperierluft einstellbar sind, und/oder die Temperatur mindestens einer Wand der Temperiervorrichtung einstellbar ist, wobei bevorzugt die Menge und/oder Temperatur eines die Wand durchströmenden Temperierfluids eingestellt wird.

Eine Partikeldichte in der Umgebung der Partikel, die der Schüttgutdichte entspricht, wird von der Kontroll- und/oder Regeleinheit bevorzugt erst erlaubt, wenn die Partikel auf eine Temperatur unter 70°C, weiter bevorzugt unter 67°C, abgekühlt sind.

Unter Schüttgutdichte wird im Rahmen der Erfindung die sogenannte "lockere Schüttdichte $RHO_O$" verstanden, die sich einstellt, wenn das Schüttgut so vorsichtig wie möglich in ein Messgefäss eingefüllt wird, z.B. über einen Rieseltrichter oder ein Sieb.

Die Einstellung der Mengen, der Mischungsverhältnisse und/oder der Temperaturen kann aufgrund von Wertetabellen erfolgen, die für die Kontroll- und/oder Regeleinheit hinterlegt sind oder aufgrund von Abweichungen von Sollwerten und/oder Sollwertkurven, mit welchen erhobene Daten verglichen werden.

Die Aufgabe wird ausserdem gelöst durch ein Verfahren zum Herstellung von, bevorzugt sphärischen, Partikeln mit einem Matrixmaterial aus, bevorzugt amorph verfestigtem, Biopolymer in einer Vorrichtung umfassend eine Vorrichtung zur Formgebung und Vereinzelung, insbesondere wie oben beschrieben.

Dazu wird eine biopolymerhaltige, insbesondere zuckerhaltige, Flüssigkeit vereinzelt, insbesondere in einen Sprühraum der Vorrichtung, versprüht.

Die Lösung wird beispielsweise mittels eines Heissluftstroms, dessen Volumenstrom etwa 0.102 m$^3$/s beträgt, bei einem Fluidvolumenstrom von etwa 0.96 l/h in einem Sprühtrockner prozessiert.

Bevorzugt wird dazu Trocknungsluft verwendet, deren Temperatur bei Eintritt in den Sprühturm zwischen 150 und 190°C beträgt.

In der Mitte des Sprühturmes kann die Temperatur der Luft ca. 115-130°C und beim Ausströmen aus dem Sprühtrockner, nach einer Vermischung mit Frischluft von 20°C, noch etwa 70-85°C betragen.

Erfindungsgemäss werden die Partikel auf eine Endtemperatur, insbesondere Raumtemperatur, abgekühlt, wobei der Partikelstrom derart geführt wird, dass im Wesentlichen keine Agglomerate, also keine, wenige und/oder nur kleine Agglomerate, gebildet werden.

Die Partikel werden während des Abkühlens in Bewegung gehalten, wobei die Partikeldichte in der Umgebung der Partikel während des Abkühlens nicht auf Schüttgutdichte erniedrigt wird, die Partikel also nicht schon während des Abkühlprozesses aufgesammelt werden.

Bevorzugt wird die Partikeldichte in der Umgebung der Partikel unterhalb der Dichte gehalten, welche die Partikel in einer Wirbelschicht nach Erreichen der Lockerungs- oder Minimalfluidisierungsgeschwindigkeit aufweisen, also der Gasgeschwindigkeit, bei der eine Schüttschicht oder ein Festbett in eine Wirbelschicht übergeht. Typischerweise ist die Partikeldichte dann etwa zweibis dreimal so gross wie die Schüttgutdichte, bevor die Minimalfluidisierungsgeschwindigkeit erreicht ist.

Bevorzugt wird die Schüttgutdichte in der Umgebung der Partikel erst erreicht, wenn die Partikel auf eine Temperatur unter 70°C, insbesondere unter 67°C, abgekühlt sind.

Ein Aufsammeln der Partikel erfolgt erst, wenn die Partikel die Endtemperatur erreicht oder unterschritten haben. Das Aufsammeln kann in einem Behälter oder auf einem Wirbelbett erfolgen.

Alternativ kann die Abkühlung in einer Flüssigkeit erfolgen, in welcher die Partikel verbleiben, zum Beispiel in einer geeignet temperierten Lebensmittelsuspension.

Bevorzugt wird der Partikelstrom durch einen Kühlbereich geführt, in dem die Partikel abkühlen, ohne dass sich zu viele Partikel berühren und aneinander haften.

Der Kühlbereich kann ein Kühlrohr umfassen. Das Kühlrohr kann aktiv temperiert sein, zum Beispiel kann der Kühlbereich mit einem Temperierfluid beaufschlagt werden oder ein Temperierfluid kann durch die Wand des Kühlrohrs geführt werden.

Für die Abkühlung der Partikel kann dem Partikelstrom während der Abkühlung ein Temperierfluid, zum Beispiel Temperierluft, hinzugefügt werden. Die Temperierluft kann bezüglich des Partikelstroms und/oder bezüglich des Trockenluftstroms im Gleichoder Gegenstrom geführt werden. Die Temperierluft kann auch in einer Querströmung geführt werden.

Die Temperierluft kann als Druckluft hinzugefügt werden. Die Temperierluft kann zur Partikelstromführung eingesetzt werden.

In einer vorteilhaften Ausführung des Verfahrens können die Endtemperatur und/oder die Abkühlrate der Partikel beeinflusst werden.

Die Beeinflussung kann über einen Einstellprozess erfolgen. Der Benutzer kann zum Beispiel einen Sollwert vorgeben, zum Beispiel für die Endtemperatur der Partikel, die Temperatur der Temperierluft oder die Temperatur der Wand des Kühlbereichs oder des Temperierfluids.

Der Benutzer nimmt dazu eine Auswahl und/oder Eingabe des Sollwerts vor. Eine Änderung der Vorgabe kann im laufenden Sprühprozess vorgenommen werden.

Bevorzugt kann die Temperatur und/oder der Zustrom der Temperierluft beeinflusst werden. Die Beeinflussung kann über einen Einstellprozess oder automatisiert erfolgen.

Alternativ oder zusätzlich kann die die Verweilzeit der Partikel im Kühlbereich beeinflusst werden.

Um die Verweilzeit im Kühlbereich zu verlängern, können die Partikel einem Gegenstrom ausgesetzt werden, entsprechend kann die Verweilzeit durch einen Gleichstrom verkürzt werden.

Die Verweilzeit kann auch mit der Flussrate von zum Beispiel Kühlluft eingestellt werden.

Alternativ oder zusätzlich können die Partikel mittels einer Querströmung aus dem Kühlbereich herausgetrieben werden.

Die Verweilzeit im Kühlbereich kann über eine Anpassung der Kühlrohrlänge eingestellt werden. Je länger das Kühlrohr ist, desto länger kann die Flug- oder Fallzeit im Kühlbereich sein und desto besser können sich die Partikel der Endtemperatur annähern. Die Länge des Kühlrohrs kann verstellbar sein.

Bevorzugt findet ein Trocknen im Gleich- oder Gegenstrom statt. Insbesondere wird eine Einstellung der Temperatur und/oder Menge des Gegenstroms oder Gleichstroms vorgenommen. Alternativ oder zusätzlich kann ein Trocknen mit Mikrowellen stattfinden. Dazu wird insbesondere die Mikrowellenleistung und/oder die Dauer der Mikrowelleneintragung festgelegt. Mit einer Mikrowellentrocknung kann gleichzeitig eine Inaktivierung von Mikroorgansimen erreicht werden.

Ausserdem kann eine Trocknung bewirkt werden, indem die Partikel einem Unterdruck ausgesetzt werden, also der Druck in der Umgebung der Partikel gegenüber dem Normaldruck herabgesetzt wird.

Bevorzugt wird der Trocknungsgrad über eine Benutzereingabe festgelegt.

In einem Beispiel wurde Trockenzuluft mit einer Temperatur zwischen 90°C und 180°C, bevorzugt von etwa 120°C, in die Sprühvorrichtung geleitet. Die Trocknungsluftmenge betrug dabei 920 Nm$^3$ h$^{-1}$ (Normkubikmeter pro Stunde). Bei einem Sprühdruck von 0.5 - 6 bar wurde eine Sprühluftmenge zwischen 1 und 25 Nm$^3$ h$^{-1}$ erreicht. Entsprechend ergab sich ein Durchfluss der Sprühflüssigkeit von 4 - 12 kg h$^{-1}$.

Für industrielle Anwendungen kann der Durchfluss der Sprühflüssigkeit auf über 2 t h$^{-1}$, bevorzugt über 10 t h$^{-1}$, gesteigert werden, so dass ein Pulverdurchsatz von mindestens 1 t h$^{-1}$ erreicht werden kann.

Die Atomisierungsluft kann nach dem Zerstäuben abgeführt oder als Temperierfluid zum Abkühlen genutzt werden.

Die Aufenthaltsdauer in der Sprühkammer liegt bei 5-8 Sekunden. Die Partikel heizen sich auf etwa 60°C - 90°C auf.

In einer vorteilhaften Ausführung des Verfahrens erfolgt eine Trocknung auf eine Restfeuchte von 0.5-4.5Gew.% anschliessend werden die Partikel abgekühlt.

Die Partikel mit einem Matrixmaterial aus Zucker, insbesondere mit einem DE grösser 20, haben dann eine amorphe Struktur und neigen bei Raumtemperatur nicht Kristallisieren und zum Agglomerieren.

Insbesondere werden der Trocknung und die Abkühlung aufeinander abgestimmt.

Je trockener die Partikel sind, also je geringer der Wassergehalt der Partikel ist, desto weniger neigen sie zu Agglomeratbildung, desto weniger stark müssen sie abgekühlt werden, bevor sie sich berühren dürfen. Je tiefer der Wassergehalt in der Zuckermatrix, desto höher ist die Glasumwandlungstemperatur ($T_g$). Unterhalb der Tg sind die Partikel glasartig und entsprechend weniger klebrig als oberhalb der Tg.

Die der Erfindung zugrunde liegende Aufgabe wird ausserdem gelöst durch eine Verwendung von sphärischen Partikeln mit einem Matrixmaterial aus, insbesondere amorph verfestigtem, Biopolymer, insbesondere Zucker, zum Beeinflussen der Fliesseigenschaften, insbesondere der Viskosität, einer fliessfähigen Lebensmittelmasse, während des Herstellungs- und/oder Verarbeitungsprozesses eines Lebensmittelprodukts. Bei den Partikeln handelt es sich insbesondere um Partikel, die mit einem Verfahren und/oder in einer Vorrichtung hergestellt werden, wie sie oben beschrieben sind.

Insbesondere weisen mindestens 90% der Partikel einen Durchmesser von unter 500µm auf.

Bei der Lebensmittelmasse handelt es sich insbesondere um eine Fettmasse, weiter insbesondere eine Schokoladenmasse.

Die Verwendung erfolgt bevorzugt in einer Giessmaschine.

Bevorzugt weisen mindestens 90% (bezogen auf das Volumen) der erzeugten Partikel einen Durchmesser von unter 500µm auf, bevorzugt kleiner als 100 µm und noch weitergehend bevorzugt kleiner 50 µm. Bevorzugt haben mindestens 60% (bezogen auf das Volumen) der Partikel eine Durchmesser zwischen 2 µm und 40 µm, insbesondere sind 80% des Volumens der Partikel grösser als 1µm.

Bevorzugt sind gemäss Partikelgrössenverteilung (volumenbasiert, $x_{90,3}$) die Durchmesser von 90% des Volumens aller Partikel kleiner als 40 µm und gemäss Partikelgrössenverteilung (volumenbasiert, $x_{10,3}$) von 90% des Volumens aller Partikel grösser als 1 µm.

Bevorzugt weist die Grössenverteilung der sphärischen Partikel ein Verteilungsbreite, beschrieben durch die Standardabweichung s = ($x_{90,3}-x_{10,3}$) /$x_{50,3}$, von kleiner 20, bevorzugt kleiner 5 und weitergehend bevorzugt kleiner 3 auf.

Die Durchmesserangabe bezieht sich dabei auf eine mit Laserbeugungsspektroskopie, zum Beispiel mit einem Beckman Coulter LS13320 Gerät, ermittelte Partikelgrösse.

Die Partikel können in einer monomodalen, bimodalen oder multimodalen Verteilung vorliegen. Die jeweiligen Schwerpunkte der Verteilung werden je nach Lebensmittelmasse und gewünschten Effekt gewählt.

Die sphärischen Partikel können einer Lebensmittelmasse als Schüttgut oder, verteilt in einem Trägermaterial, als Suspension mit einer Zuführeinrichtung zugeführt werden. Die Zuführeinrichtung kann eine Einmischvorrichtung umfassen.

Die Partikel umfassen insbesondere amorph verfestigtes Biopolymer, aber es können auch sphärische Partikel mit kristallinem, teilkristallinem oder nachkristallisiertem Biopolymer verwendet werden. Es kann sich bei den sphärischen Partikeln auch um Agglomerate aus kleineren Teilchen, zum Beispiel Nanopartikeln, handeln.

Mit den sphärischen Partikeln kann das Fliessverhalten einer Lebensmittelmasse zur Herstellung von Lebensmitteln beeinflusst, insbesondere die Viskosität und/oder die Fliessgrenze der Lebensmittelmasse eingestellt und/oder erniedrigt, werden. Eine gute Fliessfähigkeit ist insbesondere stromabwärts des Massebehälters notwendig, wenn die Lebensmittelmasse zum Beispiel durch die engeren Kanäle der Dosierventile und Ausgiessdüsen fliesst oder sich beim Überziehen auf einem Halbfabrikat oder Vorprodukt verteilen soll. Zu diesem Zeitpunkt ist die Lebensmittelmasse bereits geeignet temperiert.

Bei Fettmassen, zum Beispiel Schokoladenmassen, liegen beispielweise schon die für die spätere Kristallisation günstigen $\beta_V$ und $\beta_{VI}$ Kristallkeime der Kakaobuttermasse vor, die nach dem Vergiessen zu der gewünschten Kristallbildung führen.

Es wäre daher ungünstig, die Masse unmittelbar vor dem Vergiessen zu erwärmen oder noch einmal einer intensiven Scherung zu unterziehen, wenn sich herausstellt, dass die Fliessfähigkeit zu gering ist. Mit einer Erhöhung des Anteils von sphärischen Partikeln am Feststoffanteil der Masse und/oder einem Hinzufügen von sphärischen Partikeln kann die Fliessfähigkeit ohne Erwärmen oder aufwendige mechanische Einwirkung erhöht werden.

Die Lebensmittelmasse kann ausser einem homogenen Trägermaterial, zum Beispiel einer Fettmasse, weitere Bestandteile enthalten, zum Beispiel Vitamine, Mineralien, Strukturbildner, diätische oder nicht-diätische Fasern, Fruchtbestandteile, Gemüsebestandteile, Nussbestandteile, Fruchtkernbestandteile, Fleischbestandteile, Fischbestandteile, Krustentierbestandteile, Kakaoteilchen, Kakaobestandteile, Milch, Milchbestandteile, Fruchtsaft oder Fruchtpüree, Gemüsesaft oder Gemüsepüree, Kaffeeextrakt oder Kaffeearoma, Teeextrakt oder Teearoma, Kakaoextrakt oder Kakaoaroma, Farbstoff, Farbstoffextrakt, synthetische Süssstoffe, Gewürze, künstliche und/oder naturidentische Aromen, pharmazeutisch wirksame Stoffe, und andere ernährungsphysiologisch bedeutsame Stoffe.

Die Lebensmittelmasse wird zum Beispiel mit einer Giessmaschine durch Ausgiessdüsen an einen Massezielort gegossen, zum Beispiel in Formen, auf eine Band oder auf ein Halbprodukt.

Bevorzugt werden sphärische Partikel mit einem Matrixmaterial aus, insbesondere amorph verfestigtem, Biopolymer, insbesondere Zucker, der Lebensmittelmasse zudosiert.

Insbesondere haben die sphärischen Partikel einen Fettgehalt von maximal 90Gew.%, bevorzugt weniger als 70Gew.%, weiter bevorzugt weniger als 50Gew.%.

Bevorzugt hat die Lebensmittelmasse nach dem Zudosieren der sphärischen Partikel einen Fettgehalt von kleiner als 70Gew.%, insbesondere kleiner als 60Gew.%, und einen Fettgehalt von grösser als 5Gew.%, insbesondere von grösser als 10Gew.%.

Dabei kann ein Teil der gemäss einer Rezeptur erforderlichen Bestandteile in Form von sphärischen Partikeln oder sphärischen und kantigen Partikeln oder in Form einer Basisgiessmasse, in welcher sphärischen Partikeln oder sphärische und kantige Partikeln in einem Trägermaterial verteilt sind, zudosiert werden.

Alternativ können alle gemäss einer Rezeptur erforderlichen Bestandteile, zum Beispiel der gesamte notwendige Zucker, in Form von sphärischen Partikeln oder sphärischen und kantigen Partikeln oder in Form einer Basisgiessmasse zugegeben werden.

Die sphärischen Partikel können als Schüttgut oder, verteilt in einem Trägermaterial, in einer Suspension zugeführt werden. Als Trägermaterial kann ein Material dienen, das der Lebensmittelmasse entspricht oder einen wesentlichen Bestandteil der Lebensmittelmasse bildet, zum Beispiel eine Fettmasse, wie Kakaobutter.

Die Erhöhung des Anteils von sphärischen Partikeln am Feststoffanteil und/oder die Zudosierung erfolgt insbesondere vor dem Vergiessen, sodass für das Vergiessen, also zum Führen der Lebensmittelmasse durch eine oder mehrere Ausgiessdüsen und gegebenenfalls durch ein oder mehrere Dosierventile, eine Masse mit optimierter Fliessfähigkeit zur Verfügung steht.

Die Erhöhung des Anteils von sphärischen Partikeln am Feststoffanteil und/oder die Zudosieren erfolgt bevorzugt in einen Massebehälter, zwischen Massebehälter und einer Ausgiessdüse oder in ein Dosierventil. Vorteilhafterweise werden die hinzugefügten Partikel mit der Lebensmittelmasse vermischt, sodass sich eine homogene Verteilung ergibt. Nach der Erhöhung und/oder dem Zudosieren und vor einem weiteren Verarbeitungsschritt erfolgt eine Veränderung der Fliesseigenschaften der Lebensmittelmasse, insbesondere eine Verringerung der Viskosität und/oder Fliessgrenze.

Bevorzugt kann die Menge der zuzudosierenden Teilchen während des Giessprozesses festgelegt werden, sodass die Fliesseigenschaften der Lebensmittelmasse während des Giessprozesses veränderbar sind.

Vorteilhafterweise werden die sphärischen Partikel in einem Vorratsbehälter zur Verfügung gestellt, in dem die Temperatur und/oder die Umgebungsfeuchtigkeit so eigestellt sind, dass die Partikel nicht nachkristallisieren und/oder nicht agglomerieren.

Herkömmlicher Lebensmittelmasse ist zumeist ein Emulgator zum Begünstigen der Fliesseigenschaften zugesetzt. Werden der Lebensmittelmasse sphärische Partikel hinzugefügt, kann auf einen Emulgator verzichtet werden, die Emulgatormenge kann verringert werden und/oder die Menge von sphärischen Partikeln und Emulgator werden aufeinander abgestimmt, insbesondere wenn durch das Hinzufügen der sphärischen Partikel die Rezeptur der Lebensmittelmasse beeinflusst wird, wenn beispielsweise Geschmacksstoffe in das Matrixmaterial der Partikel eingelagert sind.

Bevorzugt weist die Lebensmittelmasse einen Emulgatoranteil auf, der kleiner als 1Gew.%, bevorzugt kleiner als 0.55Gew.% ist.

Bevorzugt ist dem Schritt des Zudosierens und dem dadurch erfolgenden Schritt der Beeinflussung der Fliesseigenschaften mindestens ein Verarbeitungsschritt der Lebensmittelmasse nachgeschaltet, insbesondere ein Schritt, bei dem die Lebensmittelmasse in eine dem Endprodukt angepasste Form überführt wird, zum Beispiel durch Vergiessen, Extrudierern, Versprühen, Schleudern oder Pressen.

In einer vorteilhaften Weiterentwicklung des Verfahrens wird ein Messwert, der Rückschluss auf das Fliessverhalten, insbesondere die Viskosität, der Lebensmittelmasse erlaubt, ermittelt. Der Messwert wird insbesondere nach dem Zudosieren der Partikel ermittelt, sodass der Effekt der zudosierten Partikel auf die Fliesseigenschaft der Lebensmittelmasse beobachtet werden kann.

Es können zum Beispiel Messwerte mit einem online-Rheometer erfasst werden oder es kann die Leistung oder der Strom ermittelt werden, die notwendig sind, um eine Rührelement zum Rühren der Lebensmittelmasse zu betreiben.

Um beispielsweise eine Fliessfähigkeit von einer bestimmten gewünschten Qualität zu erhalten, kann ein Vergleich eines ermittelten Messwerts mit einem Sollwert vorgenommen werden.

Bevorzugt erfolgt eine Eingabe oder Einstellung des Sollwerts.

Vorteilhafterweise wird die Menge der zuzudosierten Partikel in Abhängigkeit von einer Abweichung vom dem Sollwert bestimmt.

Die Partikel können nach dem Zudosieren einen Anteil von grösser als 5Gew.% und kleiner als 100Gew.% des Feststoffanteils, zum Beispiel des Zuckeranteils oder der Summe aus Zucker-, Milch- und Kakaoanteilen, der Lebensmittelmasse bilden.

Dabei können die sphärischen Partikel einen Teil des gemäss Rezeptur gewünschten Zuckers oder im Grenzfall den gesamten Zucker gemäss Rezeptur ersetzen oder den gemäss Rezeptur vorliegenden Zucker ergänzen. Mit den sphärischen Partikeln können ausserdem Geschmacksstoffe in die Lebensmittelmasse eingetragen werden, wenn beispielsweise Aromastoffe oder Kakaobestandteile in dem Matrixmaterial der Partikel eingebettet sind.

Mit den sphärischen Partikeln kann somit der Lebensmittelmasse auch ein Teil der gemäss Rezeptur gewünschten Bestandteile, zum Beispiel der Milch- und/oder Kakaobestandteile, hinzugefügt werden.

Alternativ kann der Lebensmittelmasse eine Mischung von sphärischen und kantigen Partikeln hinzugefügt werden, wobei der Anteil der sphärischen Partikeln einstellbar ist. Die Partikel können als Schüttgut eindosiert werden, oder die Partikel werden als Suspension eindosiert, wobei die Partikel in einer Lebensmittelmasse verteilt sind, bevorzugt hochdosiert. Nach der Eindosierung kann sich in der Lebensmittelmasse ein Anteil von sphärischen Partikeln ergeben, der zu einer gewünschten Fliessfähigkeit führt, wobei gleichzeitig ein gewünschter Feststoffanteil oder eine vorbestimmte Rezeptur erreicht werden kann.

Es kann beispielsweise eine Basislebensmittelmasse hergestellt werden, in welcher wenig oder gar kein Feststoffanteil, zum Beispiel Zucker, enthalten ist. Je nachdem, welche Viskosität für die weitere Verarbeitung gewünscht ist, kann dann eine rezeptabhängige Menge mit entsprechenden Anteilen aus kantigen und sphärischen Feststoffpartikeln, zum Beispiel Zuckerpartikeln, zugegeben werden. Die Zugabe kann in Form von Schüttgut oder als Dispersion erfolgen. Je nach Anteil der sphärischen Partikel kann die Viskosität um bis zu einem Faktor von 5 variiert werden.

Kantige Partikel ergeben sich bei der konventionellen Herstellung und Verarbeitung von Lebensmittelmassen, beispielsweise in einer Mühle oder einem Walzwerk.

Es können beispielsweise zunächst sphärische Partikel zur Verfügung gestellt werden, die, insbesondere amorphen, Zucker enthalten und bevorzugt Milchbestandteile. In einem Matrixmaterial aus Zucker und/oder Milchbestandteilen können Einbettungen vorliegen, zum Beispiel Kakaobestandteile, Aromen und/oder Füllstoffe.

Bei den Füllstoffen kann es sich um mikrokristalline Zellulose handeln. Die Füllstoffe können als verkapselte Teilchen vorliegen, die Durchmesser zwischen 1 und 30 μm haben können. Mit den Füllstoffen kann Fett ersetzt werden, wobei die Füllstoffe zu einer geeigneten Konsistenz der Schokolade beitragen und nicht zum Kaloriengehalt betragen. Ein etwaiges sandiges Gefühl im Mund wird durch die Einbettung in Zucker vermieden.

Die Partikel können in einer Vorrichtung und/oder mit einem Verfahren zur Herstellung von Partikeln mit kontrollierter Kühlung, wie sie oben beschrieben wurden, zur Verfügung gestellt werden. Sie können beispielsweise mittels Sprühtrocknung und bevorzugt mit anschliessender kontrollierter Kühlung hergestellt werden.

Andererseits kann eine Basislebensmittelmasse, zum Beispiel auf Fettbasis, zur Verfügung gestellt werden. Diese kann aus reiner Kakaobutter bestehen, zusätzlich Emulgatoren und/oder Aromen enthalten.

Der Kakaobutter kann Kakaomasse hinzugefügt werden, mit einem Anteil, der dadurch bestimmt ist, ob eine weisse, helle oder dunkle Schokolade gewünscht ist.

Zusätzlich kann bereits konventioneller Zucker, zum Beispiel als Sirup oder in kristalliner Form, zugegeben sein.

Zur Verfügungstellung der Basislebensmittelmasse werden die Kakaobutter und die weiteren Bestandteile bevorzugt gemischt, gemahlen und/oder conchiert, damit sich die gewünschten Aromen ausbilden.

Gemäss einer vorgegeben gewünschten Viskosität oder gemäss einer vorgegeben gewünschten Viskosität und einer vorgegebenen Rezeptur werden nun sphärischen Partikel zu der Basislebensmittelmasse dosiert. Die sphärischen Partikel können entweder als Schüttgut oder als Suspension, zum Beispiel in einer Kakaobutter zugegeben werden.

Die Bestimmung der jeweiligen Anteile erfolgt durch eine Kontroll- und/oder Regeleinheit und das Zudosieren durch eine Zuführeinrichtung.

Die erhaltene Lebensmittelmasse kann vor dem Vergiessen gegebenenfalls nochmals conchiert werden. Die Lebensmittelmasse kann anschliessend geeignet temperiert werden, eventuell mit Impfkristallen für die spätere Kristallisationen versehen werden und in eine dem Endprodukt angepasste Form gebracht werden, insbesondere vergossen, extrudiert, geschleudert oder versprüht werden.

Die Erfindung wird nachfolgend in Ausführungsbeispielen anhand von Zeichnungen erläutert.

Es zeigen

Figur 1    eine schematische Darstellung eines ersten Beispiels für eine erfindungsgemässe Vorrichtung zur Sprühtrocknung;

Figur 2  eine schematische Darstellung eines zweiten Beispiels für eine erfindungsgemässe Vorrichtung zur Sprühtrocknung.

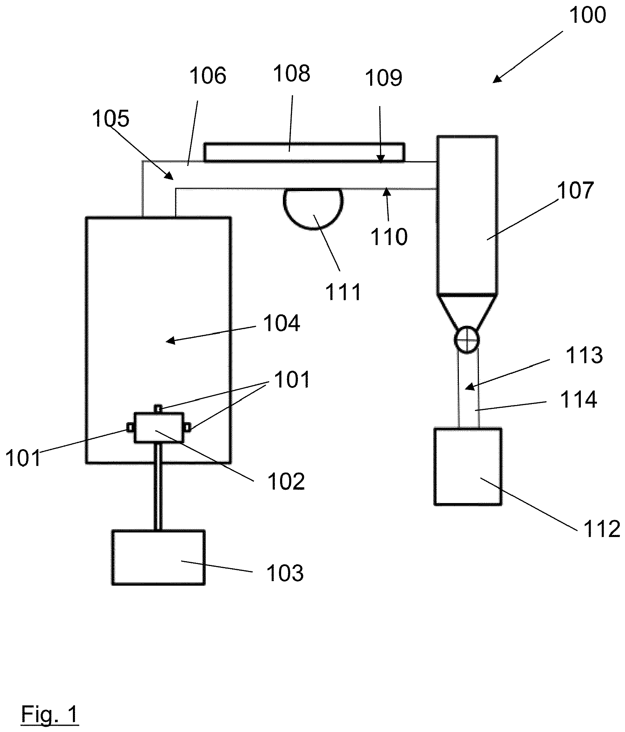

Figur 1 zeigt ein erstes Beispiel für eine Vorrichtung 100 zur Sprühtrocknung mit mehreren Sprühdüsen 101, die an einem Sprühkopf 102 angeordnet sein können. Alternativ können die Düsen auch an einer nicht in der Figur gezeigten Düsenplatte angeordnet sein.

Eine feststoffhaltige Flüssigkeit, die in ihrer Zusammensetzung dem Endprodukt entspricht, kann in einem Vorratstank 103 zur Verfügung gestellt werden und wird über die Düsen 101 in den Sprühraum 104 des Trockners versprüht.

Bei den Düsen 101 kann es sich um Mehrstoffdüsen handeln, mit denen gleichzeitig die Trockenluft eingeleitet wird.

Die Vorrichtung umfasst einen Kühlbereich 105, zum Beispiel ein erstes Kühlrohr 106.

Die Partikel werden von einem Zyklon 107 durch das Kühlrohr 106 gezogen und kühlen dabei auf eine Endtemperatur, zum Beispiel die Raumtemperatur, ab. Da die Partikel während des Abkühlens noch in Bewegung sind und noch nicht aufgesammelt werden, können sich keine Partikelagglomerate oder nur durch zufällige Begegnungen kleine Agglomerate bilden.

Der Kühlbereich 105 weist eine Temperiervorrichtung 108 auf. Im gezeigten Beispiel ist eine Wand 109 des Kühlrohrs 106 temperierbar. Die Wand 109 kann doppelwandig ausgeführt und/oder für die Durchleitung eines Temperierfluids ausgelegt sein.

Eine Wand 110 des Kühlrohrs 106 ist mit einer Vibrationsvorrichtung 111 ausgestattet, mittels welcher Anhaftungen gelöst werden können.

Die aus dem Zyklon 107 austretenden Partikel werden in einem Sammelbehälter 112 aufgesammelt. Der Sammelbehälter 112 kann als Vorratsbehälter für eine Giessmaschine dienen. Der Sammelbehälter 112 kann Vorrichtungen umfassen, durch die einen definierte Temperatur und/oder Umgebungsfeuchte gewährleistet wird.

Die Partikel können aus dem Zyklon 107 frei in den Sammelbehälter 112 fallen oder durch einen weiteren Kühlbereich 113, zum Beispiel durch ein weiteres Kühlrohr 114 geführt werden. Das Kühlrohr 114, das als Fallrohr ausgeführt ist, kann die Länge von 1,5m aufweisen. Nach der entsprechenden Fallzeit sind die Partikel auf Raumtemperatur abgekühlt.

Auch das weitere Kühlrohr 114 kann mit einer nicht explizit dargestellten Vibrations- oder Klopfvorrichtung ausgestattet sein.

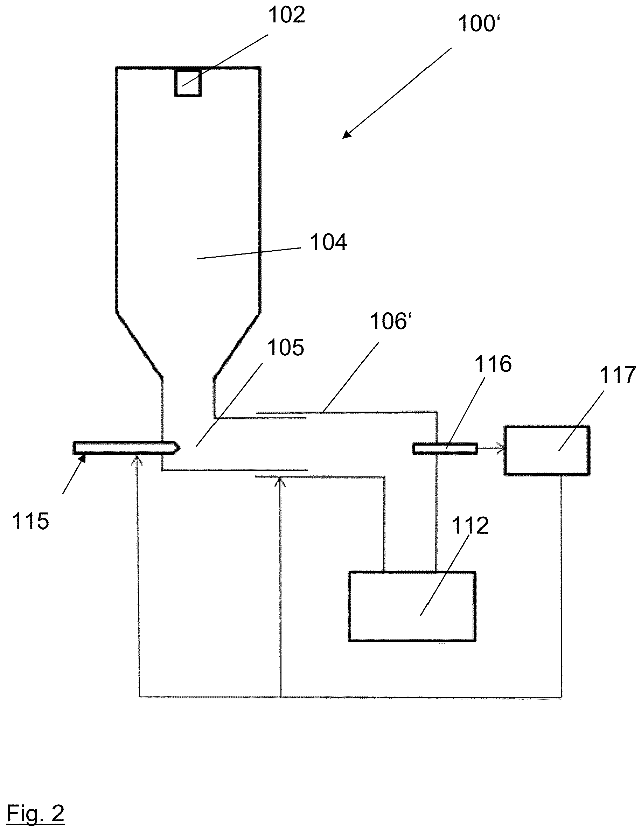

Figur 2 zeigt ein zweites Beispiel für eine Vorrichtung 100' zur Sprühtrocknung mit einem Sprühkopf 102, der im oberen Bereich eines Sprühraums 104 angeordnet ist. Der Sprühkopf 102 kann eine, bevorzugt aber mehrere nicht explizit dargestellte Sprühdüsen umfassen.

Die Partikel fallen in einen Kühlbereich 105, in dem eine Zuführung für Temperierluft 115 vorgesehen ist. Der Kühlbereich 105 umfasst ein Kühlrohr 106' mit veränderbarer Länge.

Die Partikel werden so lange im dem Kühlbereich 105 gehalten, bis sie die gewünschte Endtemperatur haben, und dann im Sammelbehälter 112 aufgesammelt.

Die Vorrichtung umfasst einen Sensor 116, mit welchem die Temperatur der Partikel erfasst werden kann, beispielweise einen NIR Sensor. Der Sensor 116 ist an eine Regeleinheit 117 gekoppelt, welche die Menge und/oder die Temperatur der einströmenden Temperierluft und/oder die Länge des Kühlrohrs 106' beeinflusst, wenn die Temperatur der Partikel von einer gewünschten Solltemperatur abweicht.

**Patentansprüche**

1. Vorrichtung zur Herstellung von Partikeln mit einem Matrixmaterial aus, insbesondere amorph verfestigtem, Biopolymer, umfassend eine Vorrichtung zur Formgebung und Vereinzelung, nämlich eine Vorrichtung zur Sprühtrocknung mit mindestens einem Zerstäuber, insbesondere einer Sprühdüse (101), **dadurch gekennzeichnet, dass** die Vorrichtung (100) einen Kühlbereich (105) umfasst, in welchem die Partikel auf eine Endtemperatur, insbesondere Raumtemperatur, abkühlbar sind und in welchem die Partikelströmung derart führbar ist, dass im Wesentlichen keine Partikelagglomerate gebildet werden, wobei der Kühlbereich (105) ein Kühlrohr (106, 114; 106') umfasst.

2. Vorrichtung nach Anspruch 1 **dadurch gekennzeichnet, dass** das Kühlrohr (106, 114; 106') eine Temperiervorrichtung (108) aufweist, insbesondere mit einem Temperierfluid, bevorzugt Temperierluft, beaufschlagbar ist, weiter insbesondere eine Zuführung (115) für Temperierfluid, bevorzugt Temperierluft, aufweist.

3. Vorrichtung nach einem der vorhergehenden Ansprüche, **dadurch gekennzeichnet, dass** mindestens eine Wand (109, 110) des Kühlrohrs (106, 114; 106') temperierbar ist, insbesondere doppelwandig ausgeführt ist und/oder für die Durchleitung eines Temperierfluids ausgelegt ist.

4. Vorrichtung nach einem der vorhergehenden Ansprüche, **dadurch gekennzeichnet, dass** mindestens eine Wand (109, 110) des Kühlrohrs (106, 114; 106') mit einer Vibrationsvorrichtung (111) oder Klopfvorrichtung ausgestattet ist, mittels welcher Anhaftungen gelöst werden können.

5. Vorrichtung nach einem der vorhergehenden Ansprüche, **dadurch gekennzeichnet, dass** die Vorrichtung (100; 100') eine Kontroll-und/oder Regeleinheit (117) zur Beeinflussung der Endtemperatur und/oder der Abkühlungsrate der vereinzelten Teilchen aufweist.

6. Verfahren zur Herstellung von, bevorzugt sphärischen, Partikeln mit einem Matrixmaterial aus, insbesondere amorph verfestigtem, Biopolymer in einer Vorrichtung zum Herstellung von Partikeln, insbesondere gemäss einem der vorangehenden Ansprüche, wobei eine biopolymerhaltige, insbesondere zuckerhaltige, Flüssigkeit vereinzelt wird, nämlich in einen Sprühraum (104) der Vorrichtung (100; 100') versprüht wird, **dadurch gekennzeichnet, dass** die Partikel auf eine Endtemperatur, insbesondere Raumtemperatur, abgekühlt werden und der Partikelstrom derart geführt wird, dass im Wesentlichen keine Agglomerate gebildet werden.

7. Verfahren gemäss Anspruch 6, wobei die Schüttgutdichte in der Umgebung der Partikel erst erreicht ist, wenn die Partikel auf eine Temperatur unter 70°C, insbesondere unter 67°C, abgekühlt sind.

8. Verfahren gemäss Anspruch 6 oder 7, **dadurch gekennzeichnet, dass** die Abkühlung in einem Kühlbereich (105) mit einem Kühlrohr (106, 114; 106'), erfolgt.

9. Verfahren gemäss Anspruch 6, 7 oder 8, **dadurch gekennzeichnet, dass** die Abkühlung in einem Temperierfluid erfolgt, insbesondere für die Abkühlung dem Kühlbereich ein Temperierfluid, bevorzugt Temperierluft, hinzugefügt wird.

10. Verfahren gemäss einem der Ansprüche 6 bis 9, **dadurch gekennzeichnet, dass** die Endtemperatur und/oder die Abkühlrate beeinflusst werden.

11. Verfahren gemäss einem der Ansprüche 6 bis 10, **dadurch gekennzeichnet, dass** die Temperatur und/oder der Zustrom des Temperierfluids, insbesondere der Temperierluft, beeinflusst werden.

12. Verfahren gemäss einem der Ansprüche 8 bis 11, **dadurch gekennzeichnet, dass** die Verweilzeit der Partikel im Kühlbereich (105) beeinflusst wird.

13. Verfahren gemäss einem der Ansprüche 6 bis 12, **dadurch gekennzeichnet, dass** ein Trocknen der vereinzelten Partikel im Gleich- oder Gegenstrom eines Temperierfluids stattfindet, insbesondere eine Einstellung der Temperatur und/oder Grösse des Gegenstroms oder Gleichstroms vorgenommen wird.

14. Verfahren gemäss einem der Ansprüche 6 bis 13, **dadurch gekennzeichnet, dass** ein Trocknen der vereinzelten Partikel mit Mikrowellen stattfindet.

15. Verfahren gemäss einem der Ansprüche 6 bis 13, **dadurch gekennzeichnet, dass** eine Trocknung der vereinzelten Partikel auf eine Restfeuchte von 0.1- 7 Gew.%, insbesondere 0.5-4.5Gew.%, und/oder bei 50°-180° C, insbesondere 60°-90° C, stattfindet, und die Partikel anschliessend abgekühlt werden.

16. Verwendung von sphärischen Partikeln mit einem Matrixmaterial aus amorph verfestigtem Biopolymer, insbesondere Zucker, von denen insbesondere mindestens 90% einen Durchmesser unter $500\mu m$ aufweisen, zum Beeinflussen der Fliesseigenschaften, insbesondere der Viskosität einer fliessfähigen Lebensmittelmasse, insbesondere einer Fettmasse, weiter insbesondere einer Schokoladenmasse, während des Herstellungsprozesses eines Lebensmittelprodukts, insbesondere in einer Conche, in einem Mischer oder in einer Giessmaschine.

100

106 108 109

105

107

104

101

101

102

110

111

113

114

112

103

Fig. 1

Fig. 2

Europäisches
Patentamt

European
Patent Office

Office européen
des brevets

# EUROPÄISCHER RECHERCHENBERICHT

Nummer der Anmeldung

EP 17 16 6151

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 1 240 691 A (TATE & LYLE REFINERIES LTD [GB]) 28. Juli 1971 (1971-07-28) * Seite 1, Zeile 40 - Seite 3, Zeile 28; Abbildung 1; Beispiele 1,2 * ----- | 1-15 | INV. A23P10/40 A23G1/00 A23G1/40 A23P10/22 |
| X,D | US 2016/242432 A1 (WINDHAB ERICH JOSEF [CH] ET AL) 25. August 2016 (2016-08-25) * Absatz [0267] - Absatz [0270] * * Absatz [0285] - Absatz [0286] * ----- | 1-16 | A23G1/04 A23L3/46 B01D1/18 B01J2/16 A23G7/02 |
| A | US 2014/017362 A1 (NEVIAN ANDREAS [DE] ET AL) 16. Januar 2014 (2014-01-16) * Absatz [0050] - Absatz [0051] * ----- | 1-16 | B01J2/04 |

RECHERCHIERTE SACHGEBIETE (IPC)

A23P
A23G
A23L
B01D
B01J

Der vorliegende Recherchenbericht wurde für alle Patentansprüche erstellt

| Recherchenort | Abschlußdatum der Recherche | Prüfer |
|---|---|---|
| Den Haag | 9. Oktober 2017 | Granet, Nicolas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 16 6151

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-10-2017

| Im Recherchenbericht angeführtes Patentdokument | Datum der Veröffentlichung | Mitglied(er) der Patentfamilie | Datum der Veröffentlichung |
|---|---|---|---|
| GB 1240691 A | 28-07-1971 | KEINE | |
| US 2016242432 A1 | 25-08-2016 | CA 2924237 A1 | 09-04-2015 |
| | | CN 105592710 A | 18-05-2016 |
| | | EP 3051956 A2 | 10-08-2016 |
| | | JP 2016531560 A | 13-10-2016 |
| | | US 2016242432 A1 | 25-08-2016 |
| | | WO 2015049292 A2 | 09-04-2015 |
| US 2014017362 A1 | 16-01-2014 | AU 2012204881 A1 | 25-07-2013 |
| | | CN 103429095 A | 04-12-2013 |
| | | DK 2474236 T3 | 08-07-2013 |
| | | EP 2474236 A1 | 11-07-2012 |
| | | ES 2422418 T3 | 11-09-2013 |
| | | JP 2014501531 A | 23-01-2014 |
| | | KR 20140003456 A | 09-01-2014 |
| | | PT 2474236 E | 17-07-2013 |
| | | RU 2013136896 A | 20-02-2015 |
| | | SG 191756 A1 | 30-08-2013 |
| | | US 2014017362 A1 | 16-01-2014 |
| | | WO 2012093139 A1 | 12-07-2012 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2015049292 A
- DE 102004024681
- WO 9838223 A
- EP 1031285 A
- US 20100323067 A
- US 20060121164 A

### In der Beschreibung aufgeführte Nicht-Patentliteratur

- **HOFFMANN ; MAUCH ; UNTZE.** Zucker und Zuckerwaren. 2002, 234-235